# EUROPEAN PATENT SPECIFICATION

(11) **EP 1 815 997 B1**
(45) Date of publication and mention of the grant of the patent: **11.11.2009**
(21) Application number: 07002296.7
(22) Date of filing: 02.02.2007
(51) Int. Cl.: B41J 2/365

(54) **Accumulated-heat correction apparatus and accumulated-heat correction method for thermal head**
Vorrichtung und Verfahren zur Korrektur von Speicherwärme
Dispositf et procédé de correction de chaleur accumulée

(30) Priority: 07.02.2006 JP 2006029640
(43) Date of publication of application: 08.08.2007
(73) Proprietor: MITSUBISHI ELECTRIC CORPORATION, Chiyoda-ku Tokyo 100-8310 (JP)
(72) Inventor: Hatakenaka, Takashi c/o Mitsubishi Electric Corp., Tokyo 100-8310 (JP)
(74) Representative: Pfenning, Meinig & Partner GbR

(56) References cited:
- WO-A-97/27062
- US-A- 5 235 345
- US-A- 5 623 297

## Description

### BACKGROUND OF THE INVENTION

### Field of the Invention

This invention relates to an accumulated-heat correction apparatus and an accumulated-heat correction method for the thermal head of a thermosensitive printer, a thermosublimation printer or the like.

### Description of the Related Art

A prior-art accumulated-heat correction method of the type specified above will be described in due course.

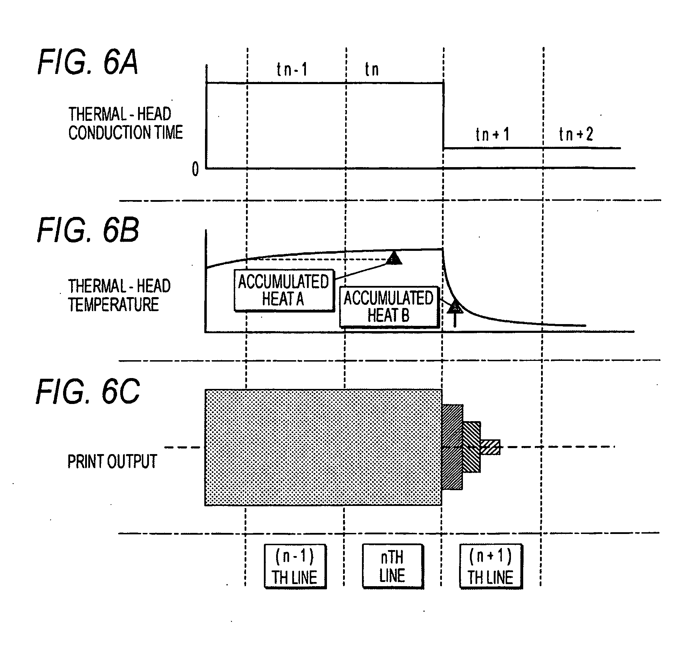

Figs. 6A - 6C are conceptual diagrams in the case where accumulated heat is not corrected.

Fig. 6A shows a thermal-head conduction time. Usually, a thermal head comes to have a heat quantity corresponding to the conduction time. Fig. 6B shows a thermal-head temperature corresponding to the thermal-head conduction time in Fig. 6A. Usually, the density of a print is obtained in correspondence with the temperature of the thermal head. Fig. 6C exemplifies a print output generated by the thermal-head conduction time in Fig. 6A, and the central part thereof shows the states of the print densities. The conduction time of the (n - 1)*th* line is tₙ₋₁, that of the n*th* line is tₙ, and that of the (n + 1)*th* line is tₙ₊₁.

Referring to Fig. 6A, the conduction time tₙ₋₁ of the (n - 1)*th* line and the conduction time tₙ of the nth line have an identical value tₙ₋₁ = tₙ. However, heat is accumulated in the thermal head, so that when a current is conducted through the thermal head for equal time periods, a temperature rise corresponding to accumulated heat A occurs at the nth line as shown in Fig. 6B.

That is, notwithstanding that the (n-1)*th* line and the nth line are intended to be printed at an identical density, the density of the n*th* line becomes higher than that of the (n - 1)*th* line in correspondence with the accumulated heat A on account of the heat accumulation of the thermal head.

Likewise, at the (n + 1)*th* line, the conduction time is decreased to tₙ₊₁ with the intention of a print which does not develop any color, but an intended print density is not attained on account of residual heat corresponding to an accumulated heat B.

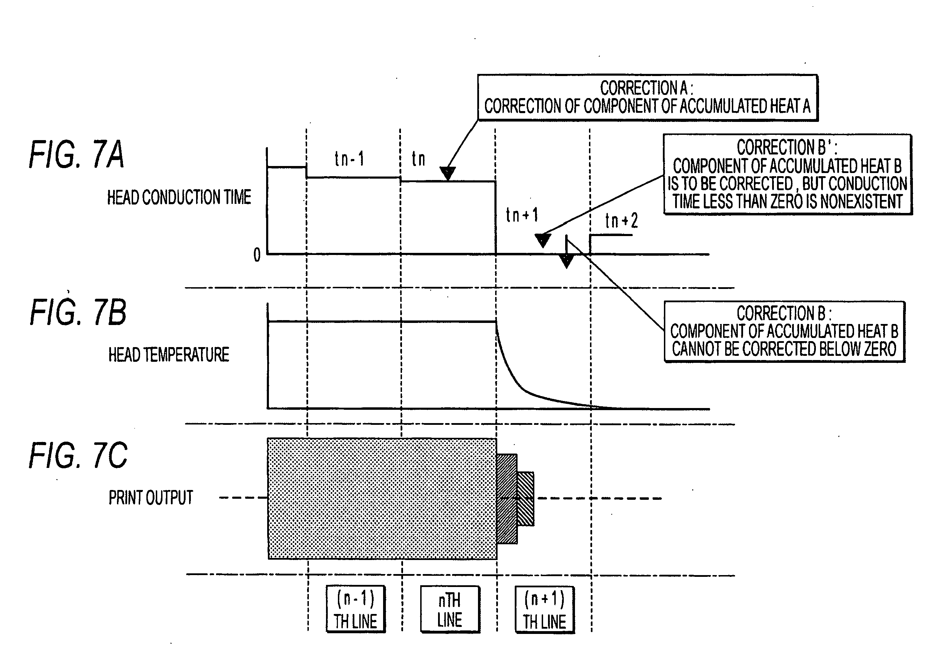

Next, a prior-art example in which accumulated heat is corrected is shown in Figs. 7A - 7C.

In the correction of the nth line in Figs. 7A - 7C, the conduction time of the nth line is decreased in correspondence with a correction A in Fig. 7A in order that the accumulated heat A of the nth line as shown in Fig. 6B may not incur the temperature rise.

The conduction time tₙ in Fig. 7A is obtained by subtracting the component of the correction A from the ordinary conduction time. Thus, as shown in Fig. 7B, the temperatures (or heat quantities) of the thermal head become substantially identical at the (n-1)*th* line and the n*th* line, and the intended density of the n*th* line is attained, so that the accumulated-heat correction is successfully made.

Likewise, in the correction of the (n + 1)*th* line, the conduction time of the (n + 1)*th* line is subtracted in correspondence with the accumulated heat B in Fig. 6B, whereby an accumulated heat quantity is corrected, and an intended print density is attained.

That is, the prior art is the accumulated-heat correction method which is schemed to attain the intended print density, in such a way that the accumulated heat quantity is predicted from data for which a current is to be conducted, and preceding data, whereupon the accumulated-heat correction is applied (refer to, for example, JP-A-2004-050563 and JP-A-2003-251844).

When the conduction time for the (n + 1)*th* line is to be corrected by the prior-art accumulated-heat correction method as stated above, the accumulated heat B remaining at the (n + 1)*th* line as indicated in Fig. 6B must be corrected. However, when the conduction time of the thermal head is to be subtracted as indicated at a correction B in Fig. 7A, it becomes less than zero. Since the conduction time does not become less than zero, a correction magnitude at the (n + 1)*th* line becomes a correction B'.

That is, a correction magnitude is short by (the correction B - the correction B') for the (n + 1)*th* line, and the intended print density of the (n + 1)*th* line cannot be attained.

US-A-5 623 297 discloses an apparatus for controlling a thermal printhead which comprises a controller for applying a power signal to a printing element as a function of a selected data byte. A memory contains data bytes indicating the past and/or future printing history of both the selected printing element and the printing elements adjacent to it, and these data are used along with data indicative of the temperature of the selected printing element to determine the magnitude of the signal that is applied to the selected printing element. For example, the energization state of the selected printing element for the current scan line, the energization states of this element for several previous scan lines and the energization state of this element for the next scan line are recorded in the history memory.

Further, US-A-5 235 345 shows an apparatus for recording an image on a thermal-sensitive medium based on a pixel signal which has an on-mode and an off-mode. A control circuit is provided for controlling heating currents supplied to a thermal head. Pulse widths of the heating currents are calculated in reference to pixel data within a predetermined image area. The image area includes past pixel data and future pixel data, as well as the present pixel data. The required pulse width of the current for preheating or substantially heating the thermal head is determined by suitably estimating a heat accumulation on the thermal head from the calculation. That is, the control circuit carries out a determination of the pulse width of the heating current for recording a dot mark on the recording medium in reference to the past pixel data, an estimation of the amount of heat accumulation of the thermal head for the present pixel in reference to future pixel data, and a determination of the pulse width of the heating current for preheating the thermal head in reference to the future pixel data in response to the present space dot.

The prior art has had the problem that, although the density at which any color is not developed is intended for the (n + 1)*th* line, the accumulated-heat correction cannot be fully made, resulting in a print density at which a color is somewhat developed.

### SUMMARY OF THE INVENTION

This invention has been made in order to eliminate the problem as stated above, and it has for its object to provide an accumulated-heat correction apparatus and an accumulated-heat correction method for a thermal head for accurately reproducing a desired print density.

This object according to the invention is solved y an apparatus as defined in claim 1 and a method in claim 2, respectively.

This invention concerns an accumulated-heat correction apparatus for a thermal head, wherein print data of each line are outputted to the thermal head, and a conduction time of the thermal head is controlled on the basis of the print data. In the accumulated-heat correction apparatus, cumulative-data calculation means calculates cumulative data which is ascribable to accumulated heat of the thermal head up to a previous line. Next-line data calculation means calculates print data of a next line. Correction-data generation means calculates correction data which corrects print data of a current line, by using the cumulative data and the next-line data. Further, head control means controls the conduction time of the thermal head on the basis of the correction data which has been generated by the correction-data generation means.

In addition, this invention concerns an accumulated-heat correction method for a thermal head, wherein print data of each line are outputted to the thermal head, and a conduction time of the thermal head is controlled on the basis of the print data. In the accumulated-heat correction method, cumulative data which is ascribable to accumulated heat of the thermal head up to a previous line is calculated, and also print data of a next line is calculated. Correction data which corrects print data of a current line is calculated by using the cumulative data and the next-line data. Further, the conduction time of the thermal head is controlled on the basis of the correction data.

According to the accumulated-heat correction apparatus and the accumulated-heat correction method for the thermal head in this invention, the data of the next line is also considered in the portion of the accumulated-heat calculation. Thus, in a case where the accumulated heat of the next line cannot be corrected, the correction is applied to the current line, whereby a desired print density is attained, and a print which has a high image quality as a whole can be obtained.

The foregoing and other objects, features, aspects, and advantages of this invention will become more apparent from the following detailed description of this invention when taken in conjunction with the accompanying drawings.

### BRIEF DESCRIPTION OF THE DRAWINGS

Fig. 1 is a block circuit diagram showing an embodiment of this invention;
Fig. 2 is a diagram showing the flow of an accumulated-heat correction process based on block circuits in Fig. 1;
Figs. 3A - 3C are conceptual diagrams showing an accumulated-heat correction method according to the embodiment;
Fig. 4 is a model diagram for explaining the accumulated-heat correction method according to the embodiment, in comparison with the prior art;
Fig. 5 is an explanatory diagram showing a print area obtained by the accumulated-heat correction method according to the embodiment, in comparison with a prior-art example;
Figs. 6A - 6C are conceptual diagrams in the case where accumulated heat is not corrected; and
Figs. 7A - 7C are conceptual diagrams in the case where a prior-art accumulated-heat correction is made.

### DESCRIPTION OF THE PREFERRED EMBODIMENT

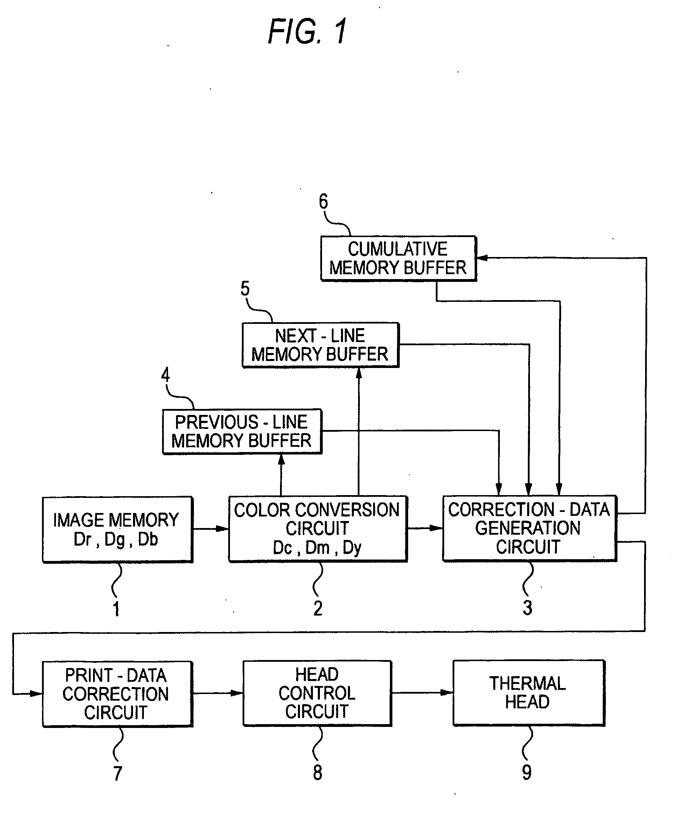

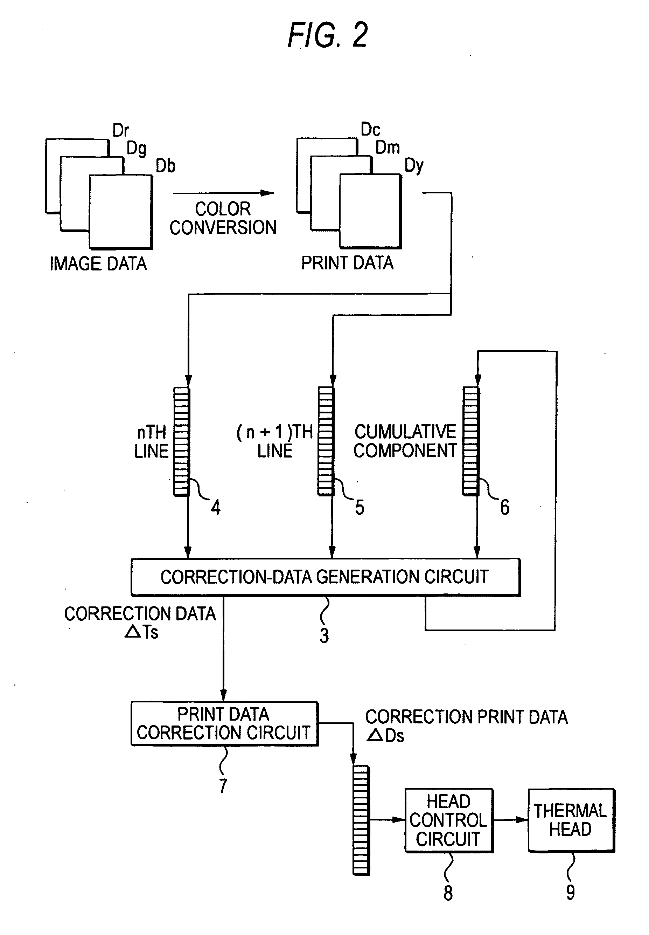

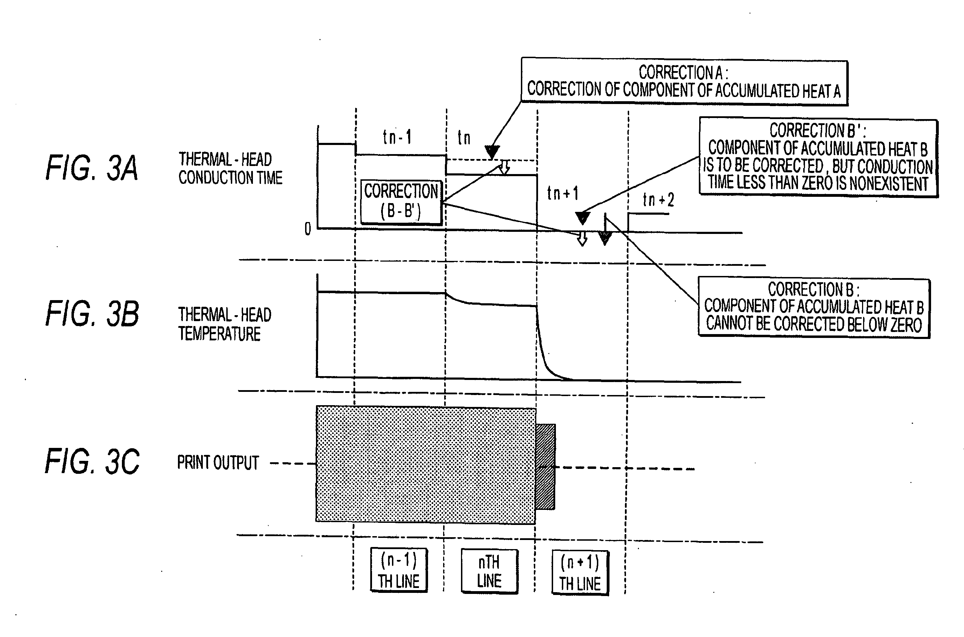

Fig. 1 is a block circuit diagram showing an embodiment of this invention, Fig. 2 is a diagram showing the flow of an accumulated-heat correction process based on block circuits in Fig. 1, and Figs. 3A - 3C are conceptual diagrams showing an accumulated-heat correction method according to the embodiment.

Referring to Fig. 1, an image memory 1 receives image data Dr, Dg and Db of respective colors R, G and B from an external computer or the like. A color conversion circuit 2 converts the image data Dr, Dg and Db of the respective colors into print data Dc, Dm and Dy of respective colors C, M and Y, and it stores these print data Dc, Dm and Dy in a current memory buffer 4.

In addition, at this point of time, cumulative data up to a previous line (n - 1) are stored in a cumulative memory buffer 6, and print data of next line (n + 1) is stored in a next memory buffer 5.

A correction-data generation circuit 3 reads out the print data at a current line n, from the current memory buffer 4, the cumulative data up to the previous line (n - 1), from the cumulative memory buffer 6, and the print data at the next line (n + 1), from the next memory buffer 5, respectively. Besides, the correction-data generation circuit 3 processes these print data on the basis of a predetermined calculation formula, thereby to calculate correction data ΔTs for correcting the print data of the current line n. Here, in calculating the correction data ΔTs of the current line n, the correction-data generation circuit 3 predicts a correction magnitude at the next line (n+1), and it adjusts the correction data ΔTs of the current line n in a case where the predictive value is greater than the maximum of an available conduction time or less than the minimum thereof.

A print-data correction circuit 7 adds the correction data ΔTs of the current line n as calculated by the correction-data generation circuit 3, to the print data of the current line n, thereby to calculate correction print data ΔDs .

A head control circuit 8 reads out the correction print data ΔDs of each individual line from the print-data correction circuit 7, and it generates predetermined thermal energy by conducting a current through the individual heat generation elements of a thermal head 9 on the basis of the correction print data ΔDs, thereby to form an image of predetermined density on a record sheet every line.

Figs. 3A - 3C show conceptual diagrams of an accumulated-heat correction calculation according to the embodiment of this invention.

In the figures, Fig. 3A shows the conduction time of the thermal head, Fig. 3B shows the temperature of the thermal head, and Fig. 3C shows an example of a print output.

The print data of the (n + 1)*th* line is read out at the n*th* line in Figs. 3A - 3C, by the correction-data generation circuit 3. In a case where a conduction time for the value of the print data is greater than the maximum of the available conduction time or less than the minimum thereof, a correction accumulated-heat magnitude corresponding to (a correction magnitude B - a correction magnitude B') which cannot be corrected is subtracted from the conduction time of the n*th* line, thereby to remove the uncorrectable component of the (n + 1)*th* line.

Owing to such an accumulated-heat correction, as shown in Fig. 3C, an intended density can be attained at the (n + 1)*th* line having been uncorrectable, though the density of the n*th* line fluctuates to some extent.

Both the n*th* line and the (n + 1)*th* line are permitted to attain intended print densities by adjusting the magnitude of reflection on the n*th* line.

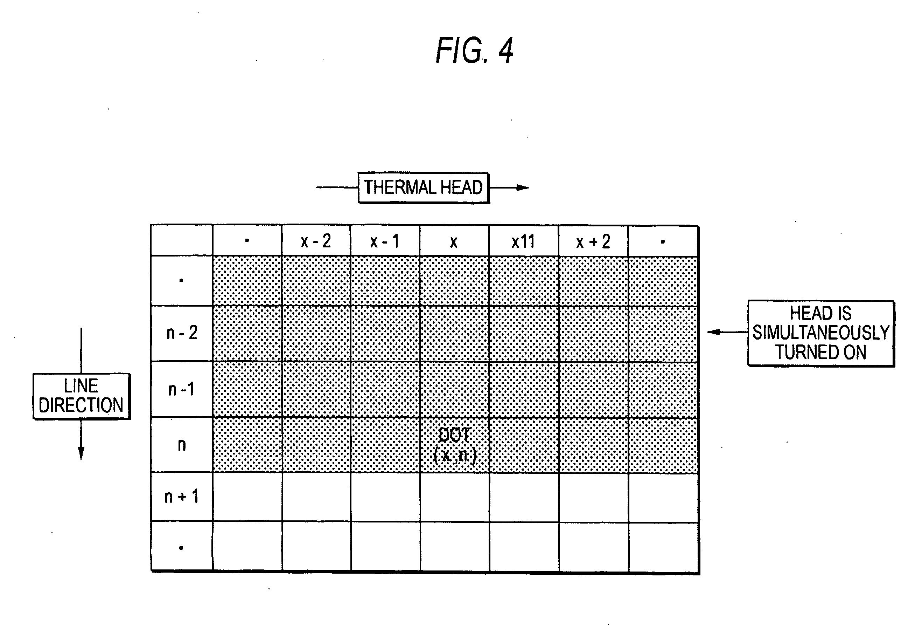

Further, Fig. 4 is a model diagram for explaining the accumulated-heat correction method according to the embodiment of this invention, in comparison with the prior art.

In the case of the prior art, ordinarily the thermal head is turned ON simultaneously for individual dots at the n*th* line, and the density of a print is attained in the ON time period of the individual dots. Here, an accumulated heat quantity up to the (n - 1)*th* line and the accumulated heat quantity of the lateral dots of a print dot are corrected in the ON time period of the head.

Let's consider the correction of a dot DOT (x, n) at the n*th* line as shown in Fig. 4. It is assumed that an image to be printed is, for example, 8-bit data which has 128 gradations (0: white/ 128: gray/ 255: black), and that the ON time period of the thermal head becomes 0.5 msec (0.1 msec: white/ 0. 5 msec: gray/ 1.0 msec: black) (it is assumed that one line is printed in 2 msec). Then, when the thermal head is turned ON for 0.5 msec, the dot DOT (x, n) ought to become gray, but it is actually influenced by the surroundings.

In a case, for example, where a dot DOT (x, n - 1) is black, the dot DOT (x, n - 1) is turned ON for 1 msec and turned OFF for 1 msec at the (n - 1)*th* line (because one line is assumed to be of 2 msec), whereupon the turn-ON of the dot DOT (x, n) is started. On this occasion, if the head temperature has lowered to the original temperature in the OFF period of 1 msec, the dot DOT (x, n) becomes gray by the turn-ON of 0.5 msec, but if not, the dot DOT (x, n) becomes denser than the ordinary gray by the turn-ON of 0.5 msec. The same holds true of left and right dots which are simultaneously turned ON. In a case where the adjacent dots DOT (x - 1, n) and DOT (x + 1, n) are printed in black, also the dot DOT (x, n) is influenced by heat.

In this manner, the prior art controls the ON time period of the n*th* line and controls the heat generation quantity thereof in consideration of the accumulated heat quantity before the n*th* line and the influences of the adjacent dots to-be-turned-ON. Disadvantageously, however, the ON time period cannot be set less than zero or in excess of a line rate.

This invention eliminates the disadvantage. In case of controlling the ON time period of the dot DOT (x, n), the same calculation as in the prior art is executed, and the same calculation is thereafter executed for a dot DOT (x, n + 1) on the basis of the input data of the (n + 1)*th* line. Even in a case where the calculated result of the dot DOT (x, n + 1) becomes a (-) time period, the ON time period does not become less than zero at the dot DOT (x, n + 1), so that the print time period of the preceding dot DOT (x, n) is subtracted. The subtraction of the print time period of the dot DOT (x, n) assists in the correction of the next line.

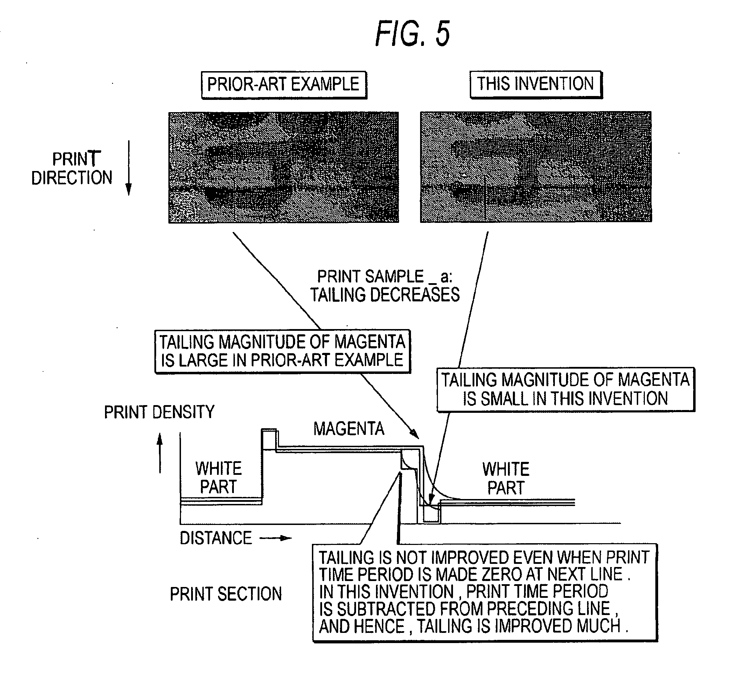

Fig. 5 is an explanatory diagram showing a print area obtained by the accumulated-heat correction method according to the embodiment of this invention, in comparison with a prior-art example. In the prior-art example, a tailing magnitude is large even when the print time period is made zero at the next line. In contrast, in the case of applying this invention, the print time period is subtracted from the preceding line beforehand, and hence, the tailing magnitude becomes small.

As described above, this invention consists in an accumulated-heat correction apparatus for a thermal head 9, wherein the print data of each line are outputted to the thermal head 9, and the conduction time of the thermal head 9 is controlled on the basis of the print data, including cumulative-data calculation means for calculating cumulative data which is ascribable to the accumulated heat of the thermal head 9 up to a previous line (n - 1), next-line data calculation means for calculating the print data of a next line (n + 1), correction-data generation means for calculating correction data ΔTs which corrects the print data of a current line n, by using the cumulative data and next-line data, and head control means for controlling the conduction time of the thermal head 9 on the basis of the correction data ΔTs generated by the correction-data generation means. With a thermal hysteresis correction in the prior art, in case of making the thermal hysteresis correction of the conduction time of a current line, an accumulated heat quantity is predicted from input data up to the current line and is corrected, and hence, there has been the problem that the current line cannot be corrected when the calculated result of the conduction time becomes greater than the maximum of an available conduction time or less than the minimum thereof. In contrast, according to this invention configured as stated above, an intended density can be attained at the next line (n + 1) having been uncorrectable, though the density of the current line n fluctuates to some extent. Besides, intended print densities can be attained for both the current line n and the next line (n + 1) by adjusting the magnitude of reflection on the current line n.

Various modifications and alterations of this invention will be apparent to those skilled in the art without departing from the scope of this invention, and it should be understood that this invention is not limited to the illustrative embodiment set forth herein.

## Claims

1. An accumulated-heat correction apparatus for a thermal head, wherein print data (Dc, Dm, Dy) of each line are outputted to the thermal head (9), and a conduction time of the thermal head (9) is controlled on the basis of the print data (Dc, Dm, Dy), comprising:
cumulative-data calculation means (6) for calculating cumulative data which is ascribable to accumulated heat of the thermal head (9) up to a previous line (n-1);
next-line data calculation means (5) for calculating print data of a next line (n+1); correction-data generation means (3) for calculating correction data (ΔTs) which corrects print data of a current line (n), by using the cumulative data and the next-line data; and head control means (8) for controlling the conduction time of the thermal head(9) on the basis of the correction data (ΔTs) which has been generated by the correction-data generation means(3),
**characterized in that**
the correction-data generation means (3) predicts a correction magnitude at the next line (n+1), and it adjusts the correction data (ΔTs) of the current line(n) in a case where the predicted magnitude is greater than a maximum of an available conduction time or less than a minimum thereof.

2. An accumulated-heat correction method for a thermal head, wherein print data (Dc, Dm, Dy) of each line are outputted to the thermal head (9), and a conduction time of the thermal head (9) is controlled on the basis of the print data (Dc, Dm, Dy), comprising the steps of:
calculating cumulative data which is ascribable to accumulated heat of the thermal head (9) up to a previous line (n-1), and also calculating print data of a next line (n+1);
calculating correction data (ΔTs) which corrects print data of a current line (n), by using the cumulative data and the next-line data; and controlling the conduction time of the thermal head (9) on the basis of the correction data (ΔTs),
**characterized in that**
in calculating the correction data (ΔTs) of the current line (n), a correction magnitude at the next line (n+1) is predicted, and the correction data (ΔTs) of the current line (n) is adjusted in a case where the predicted magnitude is greater than a maximum of an available conduction time or less than a minimum thereof.

## Patentansprüche

1. Speicherwärme-Korrekturvorrichtung für einen thermischen Kopf, wobei Druckdaten (Dc, Dm, Dy) für jede Zeile zu dem thermischen Kopf (9) ausgegeben werden und eine Leitungszeit des thermischen Kopfes (9) auf der Grundlage der Druckdaten (Dc, Dm, Dy) gesteuert wird, welche aufweist:
Berechnungsmittel (6) für kumulative Daten zum Berechnen kumulativer Daten, die gespeicherter Wärme des thermischen Kopfes (9) bis zu einer vorhergehenden Zeile (n-1) zuschreibbar sind;
Berechnungsmittel (5) für Daten der nächsten Zeile zum Berechnen von Druckdaten für eine nächste Zeile (n+1);
Korrekturdaten-Erzeugungsmittel (3) zum Berechnen von Korrekturdaten (ΔTs), die Druckdaten einer gegenwärtigen Zeile (n) korrigieren, durch Verwenden der kumulativen Daten und der Daten der nächsten Zeile; und
Kopfsteuermittel (8) zum Steuern der Leitungszeit des thermischen Kopfes (9) auf der Grundlage der Korrekturdaten (ΔTs), die von den Korrekturdaten-Erzeugungsmitteln (3) erzeugt wurden,
**dadurch gekennzeichnet, dass**
die Korrekturdaten-Erzeugungsmittel (3) eine Korrekturgröße bei der nächsten Zeile (n+1) vorhersagen und die Korrekturdaten (ΔTs) der gegenwärtigen Zeile (n) in einem Fall eingestellt werden, in welchem die vorhergesagte Größe größer als ein Maximum einer verfügbaren Leitungszeit oder kleiner als ein Minimum hiervon ist.

2. Speicherwärme-Korrekturverfahren für einen thermischen Kopf, wobei Druckdaten (Dc, Dm, Dy) von jeder Zeile zu dem thermischen Kopf (9) ausgegeben werden und eine Leitungszeit des thermischen Kopfes (9) auf der Grundlage der Druckdaten (Dc, Dm, Dy) gesteuert werden, aufweisend die Schritte:
Berechnen kumulativer Daten, die gespeicherter Wärme des thermischen Kopfes (9) bis zu einer vorhergehenden Zeile (n-1) zuschreibbar sind, und Berechnen auch der Druckdaten einer nächsten Zeile (n+1);
Berechnen von Korrekturdaten (ΔTs), die Druckdaten einer gegenwärtigen Zeile (n) korrigieren durch Verwendung der kumulativen Daten und der Daten der nächsten Zeile; und
Steuern der Leitungszeit des thermischen Kopfes (9) auf der Grundlage der Korrekturdaten (ΔTs),
**dadurch gekennzeichnet, dass**
bei der Berechnung der Korrekturdaten (ΔTs) der gegenwärtigen Zeile (n) eine Korrekturgröße bei der nächsten Zeile (n+1) vorhergesagt wird und die Korrekturdaten (ΔTs) der gegenwärtigen Zeile (n) in einem Fall eingestellt werden, in welchem die vorhergesagte Größe größer als ein Maximum einer verfügbaren Leitungszeit oder kleiner als ein Minimum hiervon ist.

## Revendications

1. Appareil de correction de chaleur accumulée pour une tête thermique, dans lequel les données d'impression (Dc, Dm, Dy) de chaque ligne sont délivrées à la tête thermique (9) et un temps de conduction de la tête thermique (9) est commandé sur la base des données d'impression (Dc, Dm, Dy), comprenant :
un moyen de calcul de données cumulées (6) pour calculer des données cumulées qui sont imputables à la chaleur accumulée de la tête thermique (9) jusqu'à une ligne précédente (n-1) ;
un moyen de calcul de données de ligne suivante (5) pour calculer des données d'impression d'une ligne suivante (n+1) ;
un moyen générateur de données de correction (3) pour calculer des données de correction (ΔTs), qui corrige les données d'impression d'une ligne courante (n), en utilisant les données cumulées et les données de ligne suivante ; et
un moyen de commande de tête (8) pour commander le temps de conduction de la tête thermique (9) sur la base des données de correction (ΔTs), qui ont été générées par le moyen générateur de données de correction (3),
**caractérisé en ce que**
le moyen générateur de données de correction (3) prédit une grandeur de correction à la ligne suivante (n+1) et il ajuste les données de correction (ΔTs) de la ligne courante (n) dans un cas où la grandeur prédite est supérieure à une valeur maximale d'un temps de conduction disponible ou inférieure à une valeur minimale de celui-ci.

2. Procédé de correction de chaleur accumulée pour une tête thermique, dans lequel les données d'impression (Dc, Dm, Dy) de chaque ligne sont délivrées à la tête thermique (9) et un temps de conduction de la tête thermique (9) est commandé sur la base des données d'impression (Dc, Dm, Dy), comprenant les étapes consistant à :
calculer des données cumulées qui sont imputables à la chaleur accumulée de la tête thermique (9) jusqu'à une ligne précédente (n-1), et également calculer des données d'impression d'une ligne suivante (n+1) ;
calculer des données de correction (ΔTs), qui corrigent les données d'impression d'une ligne courante (n), en utilisant les données cumulées et les données de la ligne suivante ; et
commander le temps de conduction de la tête thermique (9) sur la base des données de correction (ΔTs),
**caractérisé en ce que,**
lors du calcul des données de correction (ΔTs) de la ligne courante (n), une grandeur de correction sur la ligne suivante (n+1) est prédite et les données de correction (ΔTs) de la ligne courante (n) sont ajustées dans un cas où la grandeur prédite est supérieure à une valeur maximale d'un temps de conduction disponible ou inférieure à une valeur minimale de celui-ci.
